# EUROPEAN PATENT SPECIFICATION

(11) **EP 1 026 903 B1**
(45) Date of publication and mention of the grant of the patent: **03.11.2004**
(21) Application number: 00660015.9
(22) Date of filing: 31.01.2000
(51) Int. Cl.: H04Q 3/00

(54) **Signalling in a telecommunications network**
Signalisierung in einem Fernmeldenetz
Signalisation dans un réseau de télécommunications

(30) Priority: 05.02.1999 FI 990223
(43) Date of publication of application: 09.08.2000
(73) Proprietor: Elisa OYJ, 00380 Helsinki (FI)
(72) Inventor: Nurmisto, Harri, 03400 Vihti (FI)
(74) Representative: Lipsanen, Jari Seppo Einari

(56) References cited:
- EP-A- 0 740 480
- WO-A-98/21900
- US-A- 5 818 919

## Description

The invention relates to a method according to the preamble of claim 1 for using information transmitted in the signaling data of a telecommunication network for connecting calls.

The invention serves to expand the use of different subscriber services on the basis of connection category information obtained from the signaling data.

From the prior-art are known embodiments such as permanent category information associated with the A-subscriber identity of a connection, e.g., an alarm device adapted to permanently utilize the alarm call category, or operator category information used in operator-assisted call set-up.

NTC (Nokia Telecommunication Oy) has provided its DX 200 series switch system with a service that allows bypassing the call forwarding procedure when the call is placed from the same connection to which the call forwarding service was originally routed. The implementation of this facility is based on the A-subscriber directory number identification.

The A-subscriber connection may be associated only in special cases with such a connection category that would affect the call set-up, because such a special category would affect all the calls established from said connection, whereby services (e.g., call forwarding and others) associated with the directory number of the B-subscriber could not function properly any more. Hence, as a conventional connection cannot be associated with such categories, the group of special categories includes only said alarm devices and the like.

The implementation offered by NTC is functional only in conjunction with call forwarding services and only in the DX 200 switch system. An other example can be found in US-A-5 818 919.

It is an object of the present invention to overcome the disadvantages of the above-described technology and to provide an entirely novel type of method for utilizing the information transferred in the signaling data of a telecommunication network for connecting calls.

The goal of the invention is achieved by utilizing in call connection the call category information of the connection so that said information is changed on a per connection basis.

Such category information is defined at both international and national level in both the TUP and ISUP signaling standards. Similar definitions also exist in regard to the handling of the user service category information, and switching systems operate on the basis of these standardized functions.

More specifically, the method according to the invention is characterized by what is stated in the characterizing part of claim 1.

The invention makes it possible to expand the functionality of certain existing telecommunication services, as well as to implement entirely novel telecommunication services on the basis of conventional technology. Moreover, the invention makes it possible to further develop the functionality of existing telecommunication services and, resultingly, to extend their lifecycle and to develop fully new types of telecommunication services.

By virtue of the present invention, standardized call forwarding information can be used for producing call control data to an extent surpassing the prior-art possibilities without adding new information fields to the standardized format of call forwarding data. Herein, substantial cost savings can be expected. Also a plurality of new types of telecommunication services can be implemented on the basis of conventional signaling structures.

According to a preferred embodiment of the invention, a per connection change in call category information makes it possible to bypass a user-activated unconditional call forwarding service.

The invention is based on the fact that each connection has some type of category information assigned thereto. For normal connections, this category data has always the value "normal subscriber". The call category information is always transferred (in fact, must always be transferred) during call set-up as such along with the signaling data to the switching center acting as the home switching center of the called directory number (B-subscriber).

In the switching center serving the B-subscriber, the signaling data of the incoming call is checked to find the proper procedure for handling the call in the switching center. One of the call validation checks concerns the call category information. The incoming call received at the switching center is processed in different manners in the home switching center of the B-subscriber depending on the content of category information obtained from the signaling data.

If the call category information is set as "normal subscriber", the call processing is performed in a routine manner, whereby, e.g., all services activated for the B-subscriber are held valid meaning that, e.g., call forwarding is performed just as defined for said B-subscriber.

At the national level, however, some category information may be defined for the home switching center of the B-subscriber that must be treated differently from the "normal subscriber" category. This kind category information is, e.g.:
the alarm call category, whose handling includes the following nonstandard procedures:
   - the incoming call is not forwarded even if the B-subscriber connection would have a call-forwarding service activated,
   - the incoming call is not diverted to a call attendant service even if the B-subscriber connection would have call diversion to a call attendant service activated, and
   - the incoming call will not impose the call-waiting tone on the B-subscriber connection even if the B-subscriber connection would have the call-waiting function activated and the B-subscriber connection would happen to be busy, which means that the B-subscriber connection is signaled to be simply busy, whether call waiting is on or off.

While the invention will later in the text be elucidated with the help of said alarm call category, there is no inherent constraint that would exclude the use of other category information in a similar manner.

Because the call category information cannot be permanently associated with the A-subscriber connection, the network must contain an element that facilitates changing the call category information of the signaling data during call set-up in a desired manner. Such an element of a telecommunication network is the SSP center in which the SCP can be used to change the call category information on a per connection basis. Hence, the invention is applicable in any environment where each call is processed as IN call meaning that the call set-up always involves a request to the SCP.

In order to invoke a nonstandard procedure at the B-subscriber home center for a call placed to the B-subscriber connection, e.g., bypassing an activated service affecting the B-subscriber connection, such a call forwarding, the call must be processed in the telecommunication network in the manner shown in Fig. 1 with reference to the block numbers of the diagram:
1. Call set-up is started conventionally having the call category information set as "normal subscriber" which is also passed forward in signaling.
2. The call is directed to the (closest) intelligent network switching center (SSP).
3. SSP sends a request to the intelligent network data base (SCP) that contains information on further processing of the call.
4. SCP sends SSP a command to change the call category information "normal subscriber" → e.g. "alarm call".
5. Hereafter, call set-up is continued normally to the B-subscriber connection, however, now having the call category information of signaling data changed into, e.g., "alarm call".
6. The home center of the B-subscriber connection receives the changed category information that now may be, e.g., "alarm call" and handles the incoming call on the basis of the changed category information.
7. If the new category information that was issued by the network is, e.g., "alarm call", the call will be directed to the B-subscriber connection even if the connection has some call-forwarding service or, e.g., a call attendant service activated.

In this manner, changing the call category information with the help of the network facilities allows certain calls to be handled differently in regard to functions and services from those associated with other calls.

In the advancement of telecommunication services, the invention may be utilized in the following manner, for instance:

In the art is known a combination service for a pair of connections, in which service a certain number (e.g., 050100) commonly used by all subscribers is allocated for connecting calls between a conventional wireline connection and a GSM connection so that dialing said number (e.g., 050100) automatically with the help of intelligent network (IN) facilities sets up a call to the other connection of the pair assigned to said service.

In the spirit of the invention, said service may be developed further, e.g., in the following manner:

If a call forwarding service is activated, e.g., from a given wireline connection to the number (e.g., 050100) commonly used by all subscribers, i.e., defining the call forward destination number to be the GSM number of the service, said GSM number (and only that) may still be allowed to place a call to said designated wireline connection irrespective of the activated call forwarding service. According to the invention, this facility is provided by directing the call placed from said GSM connection to the (nearest) intelligent network switching center (SSP), whereby the SSP sends a request to the intelligent network data base (SCP) that contains information for further processing of the call. In this case, the SCP has information about the pair of numbers between which calls placed by a certain A-subscriber of the GSM network shall be connected to a given wireline number when a given common number (050100) is dialed. Herein, the SCP sends the SSP a command to change the call category information "normal subscriber" → e.g. "alarm call". Subsequently, call set-up is continued normally to the B-subscriber connection, however, now having the call category information of signaling data changed into, e.g., "alarm call" that, according to the spirit of the invention, bypasses the activated unconditional call forwarding service. The home center of the B-subscriber connection (wireline connection) receives the changed category information which now may be, e.g., "alarm call" and handles the incoming call on the basis of the changed content of the category information now replacing that originally transmitted in the signaling data.

The following exemplifying embodiment elucidates a new type of telecommunication service implemented with the help of the invention:

First, an assumption is made that connection A has activated a call forwarding service so that connection B is the destination number. Should now a call attempt be made from connection B to connection A, the call would bounce back to connection B, and so forth, up to five times.

However, with the help of the present invention a call placed from connection B (and only therefrom) can be established to ring correctly at connection A. In this manner, the destination number of the call forwarding service that may be located, e.g., in a summer cottage can be used for placing a call to the number, e.g., the home number from which the call forwarding service was activated, while all other calls placed to said home number will be forwarded to said summer cottage number. This facility can be implemented according to the invention so that the call placed from the summer cottage is directed to the (nearest) intelligent network switching center (SSP), whereby the SSP sends a request to the intelligent network data base (SCP) that contains information for further processing of the call. In this case, the SCP has information telling that if from the summer cottage number (that is, from the number defined as connection A) a call is placed to the home number (that is, the number defined as connection B), the category information of the call must be changed. Accordingly, the SCP sends the SSP a command to change the call category information "normal subscriber" → e.g. "alarm call". Hereafter, call set-up is continued normally to connection B (home number), however, now having the call category information of the signaling data changed into, e.g., "alarm call". The home center of connection B receives the changed category information which now may be, e.g., "alarm call", handles the incoming call on the basis of the changed content of the category information in the signaling data, in this case transmitted as "alarm call", and routes the call directly to connection B, irrespective of the call forwarding service that is set active for connection B.

Obviously, the invention is functional in both wireline and wireless telecommunication networks.

As signaling systems are subject to an ongoing development, the invention may invoke new applications in the future.

## Claims

1. Method of utilizing information transmitted along with the signaling data of a telecommunication network for connecting a call in an intelligent network, wherein call control uses parametric values of parameter fields of signaling protocols, and in which method
- the call is directed to a switching center (SSP) of the intelligent network, and
- the intelligent network switching center (SSP) sends a request to the intelligent network data base (SCP), wherein information is stored about the procedures to be used in conjunction with said call,
**characterized in that**
- the intelligent network data base (SCP) is controlled to send the intelligent network switching center (SSP) a command to change the category information of the call,
- call set-up toward the B-subscriber connection is next continued normally, now having the call category information replaced by the changed category information, and
- the home center of the B-subscriber connection receives the changed category information and handles the incoming call on the basis of the changed category information.

2. Method according to claim 1, **characterized in that** the method is utilized for bypassing an unconditional call forwarding service by changing the call category information "normal subscriber" into call category information "alarm call".

3. Method according to claim 1 or 2, **characterized in that** said method is utilized in conjunction with a combined pair of connections for establishing a call from the destination number of an activated call forwarding service to the number from which the call forwarding service was activated.

## Patentansprüche

1. Verfahren zur Nutzung von Informationen, die zusammen mit den Signalisierungsdaten eines Fernmeldenetzes zur Durchschaltung eines Rufs in einem intelligenten Netzwerk übertragen werden, wobei die Rufsteuerung Parameterwerte von Parameterfeldern von Signalisierungsprotokollen nutzt und wobei das Verfahren aufweist:
- der Ruf wird zu einer Vermittlungsstelle (SSP) des intelligenten Netzwerks geleitet, und
- die Vermittlungsstelle (SSP) des intelligenten Netwerks sendet eine Anfrage an die Datenbank (SCP) des intelligenten Netzwerks, wo Informationen über die Verfahren gespeichert sind, die in Verbindung mit diesem Ruf verwendet werden sollen,
**dadurch gekennzeichnet, daß**
- die Datenbank (SCP) des intelligenten Netzwerks derart gesteuert wird, daß sie der Vermittlungsstelle (SSP) des intelligenten Netzwerks einen Befehl schickt, um die Klasseninformation des Rufs zu ändern,
- als nächstes der Rufaufbau in Richtung des B-Teilnehmers normal fortgesetzt wird, wobei nun die Rufklasseninformation durch die geänderte Klasseninformation ersetzt ist,
- die Heimatvermittlungsstelle des B-Teilnehmeranschlusses die geänderte Klasseninformation empfängt und den ankommenden Ruf auf der Grundlage der geänderten Klasseninformation abwickelt.

2. Verfahren nach Anspruch 1, **dadurch gekennzeichnet, daß** das Verfahren genutzt wird, um einen unbedingten Weiterleitungsdienst zu umgehen, indem die Rufklasseninformation "normaler Teilnehmer" in die Rufklasseninformation "Alarmruf" geändert wird.

3. Verfahren nach Anspruch 1 oder 2, **dadurch gekennzeichnet, daß** das Verfahren in Verbindung mit einem kombinierten Anschlußpaar genutzt wird, um einen Ruf von der Zielnummer eines aktivierten Rufweiterleitungsdienstes zu der Nummer weiterzuleiten, von der der Rufweiterleitungsdienst aktiviert wurde.

## Revendications

1. Procédé d'utilisation d'informations transmises avec les données de signalisation d'un réseau de télécommunication pour connecter un appel dans un réseau intelligent, dans lequel le contrôle d'appel utilise des valeurs paramétriques de champs de paramètres de protocoles de signalisation, et dans lequel procédé :
- l'appel est dirigé vers un centre de commutation (SSP) du réseau intelligent, et
- le centre de commutation de réseau intelligent (SSP) envoie une requête à la base de données de réseau intelligent (SCP) dans laquelle des informations concernant les procédures à utiliser conjointement avec ledit appel sont mémorisées,
**caractérisé en ce que**
- la base de données de réseau intelligent (SCP) est contrôlée pour envoyer au centre de commutation de réseau intelligent (SSP) une commande pour modifier les informations de catégorie de l'appel,
- un établissement d'appel vers la connexion d'abonné B est ensuite poursuivi normalement, les informations de catégorie d'appel étant maintenant remplacées par les informations de catégorie modifiées, et
- le centre nominal de la connexion d'abonné B reçoit les informations de catégorie modifiées et traite l'appel entrant sur la base des informations de catégorie modifiées.

2. Procédé selon la revendication 1, **caractérisé en ce que** le procédé est utilisé pour contourner un service de renvoi d'appel inconditionnel en modifiant les informations de catégorie d'appel « abonné normal » en informations de catégorie d'appel « appel d'alarme ».

3. Procédé selon la revendication 1 ou 2, **caractérisé en ce que** ledit procédé est utilisé conjointement avec une paire de connexions combinées pour établir un appel du numéro de destination d'un service de renvoi d'appel activé vers le numéro à partir duquel le service de renvoi d'appel a été activé.
